# FASCICULE DE BREVET EUROPEEN

(11) **EP 2 681 068 B1**
(45) Date de publication et mention de la délivrance du brevet: **24.02.2016**
(21) Numéro de dépôt: 12710025.3
(22) Date de dépôt: 28.02.2012
(51) Int. Cl.: B29C 51/02, B60R 13/02, G01D 11/28, G01D 13/04, B42D 15/00, B60K 37/02

(54) **ELEMENT DECORATIF, TABLEAU DE BORD ET PROCEDE DE FABRICATION D'UN ELEMENT DECORATIF**
ZIERELEMENT, INSTRUMENTENTAFEL UND HERSTELLUNGSVERFAHREN FÜR EIN ZIERELEMENT
DECORATIVE ELEMENT, INSTRUMENT PANEL AND METHOD OF MANUFACTURING A DECORATIVE ELEMENT

(30) Priorité: 03.03.2011 DE 102011012934; 28.06.2011 FR 1102001
(43) Date de publication de la demande: 08.01.2014
(73) Titulaire: Johnson Controls Automotive Electronics SAS, 95892 Cergy-Pontoise Cedex (FR)
(72) Inventeur: GUITTON, Patrice, F-72405 La Ferte Bernard (FR)
(74) Mandataire: Schwöbel, Thilo K.
(86) Numéro de dépôt international: PCT/EP2012/000862
(87) Numéro de publication internationale: WO 2012/116805

(56) Documents cités:
- DE-T2- 60 316 155
- GB-A- 2 439 556

## Description

La présente invention concerne un élément décoratif, notamment pour affichage, un tableau de bord, notamment pour un véhicule automobile, et un procédé de fabrication d'un élément décoratif.

Des éléments décoratifs sont connus, notamment pour les tableaux de bord et notamment pour de véhicules automobiles. De tels éléments décoratifs font par exemple partie d'une surface d'affichage tel qu'un cadran d'un tableau de bord.

Par ailleurs, il est connu de prévoir un élément décoratif avec une forme trois-dimensionnelle, telle que par exemple connu de la publication DE 603 16 155 T2 comprenant toutes les caractéristiques du preambule de la revendication 1.

Un cadran, par exemple d'un tachymètre ou d'un compte-tours, peut être positionné dans un autre plan que d'autres éléments ou parties de l'élément décoratif tels que la surface sur laquelle une aiguille est entrainée.

Un tel élément décoratif est par exemple obtenue par une opération de formage - notamment par thermoformage: pendant une première étape du processus de thermoformage l'élément décoratif est échauffé par contact, l'élément décoratif étant dans un état plane et pendant une deuxième étape de formage de l'élément décoratif la forme tri-dimensionnelle est obtenue par de l'air sous pression exercé sur l'élément décoratif en appui sur une empreinte (outil de forme).

Un tel procédé de fabrication a pour conséquence que dans certaines régions de l'élément décoratif, une tendance peut être observée que le matériau de l'élément décoratif se dilate sur toute la surface échauffée. Ensuite quand l'élément décoratif est plaqué sur l'outil de forme, les zones avec relief absorbent la dilation tandis que les zones planes ne peuvent pas, il se crée des pliures. Ces pliures apparaissent d'autant plus si la zone plane a un bon contact thermique avec la plaque de chauffe (surface importante d'encre lisse ou surface avec peu de relief et peu de motifs imprimés.

Les pliures produisent un aspect esthétique négatif et augmentent ainsi les coûts de revient de l'élément décoratif.

La présente invention a notamment pour but de pallier aux inconvénients de l'art connu, et notamment ceux cités ci-dessus, et a également pour but de proposer un élément décoratif ainsi qu'un tableau de bord d'un véhicule qui peut être réalisé de manière simple et efficace et qui a un aspect esthétique avantageux.

Suivant l'invention, ce but est atteint par un élément décoratif, notamment pour l'usage liée à un tableau de bord d'un véhicule automobile,
l'élément décoratif ayant une forme tri-dimensionnelle,
l'élément décoratif comprenant une première face et une deuxième face,
la première face étant visible par un utilisateur du tableau de bord et la deuxième face étant prévu du côté opposé par rapport à la première face,
la forme tri-dimensionnelle de l'élément décoratif étant obtenu lors d'un processus de thermoformage de l'élément décoratif, l'élément décoratif comprenant une multitude d'éléments imprimés sur les deux faces. Les éléments imprimés sont un empilage de couches d'encre, chaque couche d'encre correspond à une couleur et des motifs spécifiques.

Selon la présente invention, une plaque chauffée est utilisée pour échauffer l'élément décoratif, par exemple une plaque en aluminium, échauffée par exemple à une température entre 160 °C et 165 °C (la température dépend du type de polycarbonate, des encres utilisées et de l'amplitude du formage). La face arrière de l'élément décoratif est mise en contact avec la plaque chauffante, la température est transmise à l'élément décoratif.

De par une telle réalisation de l'élément décoratif, l'invention consiste à imprimer une couche d'encre sur la face arrière en utilisant le même procédé d'impression que les autres couches. Cette couche d'encre n'est imprimée qu'à des endroits spécifiques et constitue la dernière couche d'encre imprimée sur la face arrière. La couche d'encre se caractérise par exemple par des points (plots d'encre) de petite taille ou tout autre motif lui donnant un aspect texturé avec relief. Les zones à imprimer sont définies en fonction des zones de formage. Les zones imprimés de petits points sont donc celles en dehors des zones de formage qui restent planes.

Ainsi, il est avantageusement possible, selon la présente invention, de contrôler la dilatation du matériau de l'élément décoratif et de concentrer la dilatation (ou au moins la dilatation la plus importante) dans des régions de l'élément décoratif qui sont déformées de manière relativement importante lors du thermoformage.

Selon l'invention les éléments imprimés font partie d'une couche déjà existante d'éléments de trame imprimée sur la deuxième face pour équilibrer la transparence locale de l'élément décoratif.

Ainsi, il est avantageusement possible selon la présente invention d'utiliser la couche d'éléments de trame (qui est utilisé pour équilibrer et contrôler le transfert de lumière à travers l'élément décoratif, notamment lors qu'une pluralité de diodes électroluminescentes (LED, en anglais: light emitting diodes) sont positionnées, dans l'état assemblé du tableau de bord, à des endroits différents derrière (vu de la perspective d'un utilisateur du tableau de bord) l'élément décoratif).

Selon un mode de réalisation préféré de l'élément décoratif selon la présente invention, les éléments imprimés à l'aide d'une encre transparente ou quasi-transparente.

De par une réalisation de l'élément décoratif inventif, il est avantageusement possible d'obtenir l'effet de contrôle de la température d'échauffement par contact (et ainsi de la dilatation du matériau de l'élément décoratif) aussi dans des régions de l'élément décoratif qui doivent rester transparentes.

Un perfectionnement préféré de l'invention réside dans le fait que les éléments imprimés doivent être de petite taille et suffisamment rapprochés. De par une telle réalisation du tableau de bord inventif, il est avantageusement possible d'obtenir un meilleur contrôle du comportement thermique de l'élément décoratif.

Selon un mode de réalisation préféré de l'élément décoratif selon la présente invention, les éléments imprimés ont une épaisseur perpendiculaire à la deuxième face réalisant les rehaussements aux endroits des éléments imprimés par rapport aux endroits où les éléments imprimés sont absents, les rehaussements ayant une hauteur entre 5 micromètres et 20 micromètres, , plus de préférence entre 10 micromètres et 15 micromètres.

De par une telle réalisation du tableau de bord inventif, il est avantageusement possible de réaliser une déformation simple et efficace de l'élément décoratif lors du processus de thermoformage.

Un perfectionnement préféré de l'invention réside dans le fait que l'élément décoratif comprend un matériau à base de polycarbonate (PC).

La présente invention concerne également un tableau de bord de véhicule automobile comprenant au moins un élément décoratif inventif.

La présente invention concerne par ailleurs un procédé de fabrication d'un élément décorative selon la revendication 1.

De par un tel procédé de fabrication de l'élément décoratif, il est avantageusement possible de minimiser, voir d'éviter, la formation de pliures lors du processus de thermoformage de l'élément décoratif.

Encore un perfectionnement préféré de l'invention réside dans le fait que les éléments imprimés sont imprimés avec une étendue le long de la deuxième face entre 50 micromètres et 700 micromètres, de préférence entre 100 micromètres et 500 micromètres, plus de préférence entre 100 micromètres et 300 micromètres.

Un autre perfectionnement de l'invention réside dans le fait que les éléments imprimés sont imprimés avec une épaisseur perpendiculaire à la deuxième face réalisant les rehaussements aux endroits des éléments imprimés par rapport aux endroits où les éléments imprimés sont absents, les rehaussements ayant une hauteur entre 500 nanomètres et 20 micromètres, plus de préférence entre 10 micromètres et 15 micromètres, encore plus de préférence de 12 micromètres.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
les figures 1 et 2 sont des vues sur une partie d'un tableau de bord ou d'un élément décoratif avec des pliures,
la figure 3 est une vue de face schématique d'un élément décoratif selon la présente invention,
la figure 4 est une vue de coupe schématique d'un élément décoratif selon la présente invention, et
les figures 5 à 7 se réfèrent à des vues différentes d'un élément décoratif et à des détails d'un élément décoratif.

### DESCRIPTION DES DESSINS

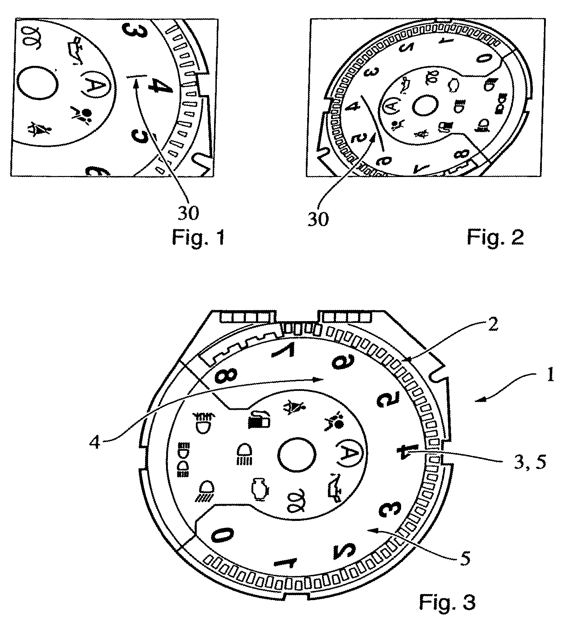

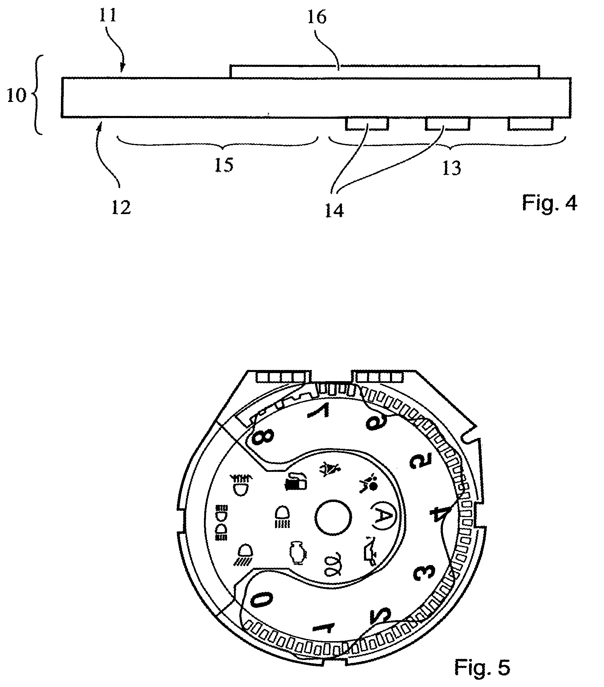

Comme le montre la figure 3 du dessin annexé, un élément d'affichage 1, par exemple pour un compte-tours ou pour un tachymètre, comporte un cadran 2 comprenant des chiffres 3. Selon la présente invention, l'élément d'affichage 1 est formé en forme tri-dimensionnelle. L'élément d'affichage est aussi appelé élément décoratif 10 et représenté dans une représentation de coupe schématique dans la figure 4. Ce qui ne peut pas être vu dans la figure 4, l'élément décoratif 10 ou l'élément d'affichage 1 comprend des parties ou des régions à différents plans pour réaliser la forme tri-dimensionnelle de l'élément décoratif 10. Ceci implique que certaines parties de l'élément décoratif 10 sont plus déformés lors du processus de thermoformage (à partir d'un état plutôt plat de l'élément décoratif) que d'autres régions ou parties. Les parties ou régions de l'élément décoratif 10 qui sont moins déformés lors du processus de thermoformage ont une tendance de produire des pliures 30 ce qui est schématiquement représenté dans les figures 1 et 2.

Selon la présente invention, l'élément décoratif 10 a une première face 11 et une deuxième face 12. La première face 11 est du côté opposé de la deuxième face 12. Sur la première face 11, il peut se trouver une région imprimée, désigné par le signe de référence 16.

Selon la présente invention, les pliures 30 peuvent être évitées ou au moins réduites lorsque les parties ou les régions qui ne sont pas déformées lors du thermoformage sont moins échauffées que d'autres régions qui sont plus déformées lors du processus de thermoformage.

Selon la présente invention, en utilisant une plaque chauffée pour chauffer par contact le matériau de l'élément décoratif 10 (lors de la première étape du processus de thermoformage pour atteindre -au moins partiellement - une température de plastification du matériau de l'élément décoratif, par exemple 160 °C ou 165 °C), le transfert de chaleur (de la plaque chauffée (non représentée dans les figures)) vers le matériau de l'élément décoratif 10 peut être contrôlé en réalisant des éléments imprimés 14 sur la deuxième face 12 de l'élément décoratif 10 (c'est à dire la face qui touche la plaque chauffée). Les éléments imprimés 14 sont, par exemple des points d'impression réalisées à l'aide d'une encre ou à l'aide d'un autre matériau qui peut être imprimé sur le matériau de l'élément décoratif 10.

La région (ou l'endroit) des éléments imprimés 14 est représentée dans la figure 4 par le signe de référence 13, par opposition à une région (ou un endroit) où les éléments imprimés 14 sont absents, cette région (ou endroit) étant représenté par le signe de référence 15. La région (ou l'endroit) 13 des éléments imprimés 14 présente une surface effective ayant une rugosité augmenté par rapport à la région 15. Ainsi, le transfert de chaleur de la plaque chauffée vers le matériau de l'élément décoratif 10 est réduit dans la région (ou les endroits) ou les éléments imprimés 14 sont présents.

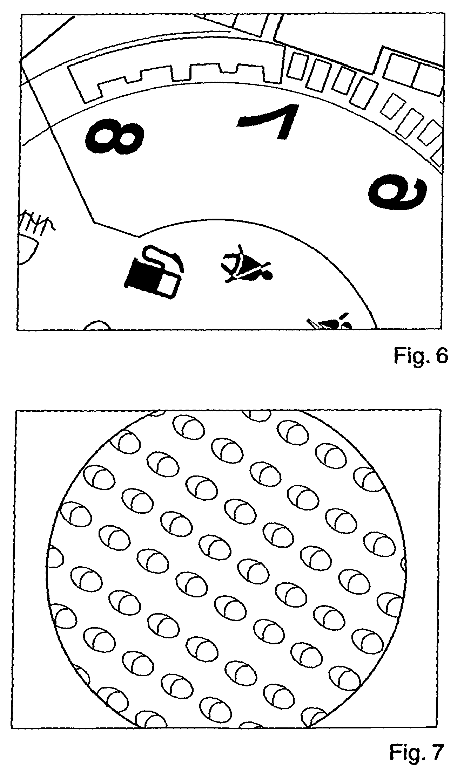

Dans le cadre de la présente invention, les éléments imprimés 14 sont aussi appelés des plots. L'exemple de la figure 7 montre une représentation des éléments imprimés 14 selon la présente invention avec une taille éléments imprimés 14 (ou des plots 14) d'environ 0,25 millimètres x 0,2 millimètres (extension parallèle au plan d'extension principale de l'élément décoratif 10), et avec une épaisseur d'environ 12 micromètres. Les éléments imprimés 14 sont arrangés, dans l'exemple représenté, de manière linéaire (c'est à dire l'un après l'autre en suivant des lignes droites) dans deux dimensions sur la deuxième face 12 de l'élément décoratif 10. Les éléments imprimés 14 sont espacés le long des lignes droites, dans l'exemple représenté, entre 0,1 millimètres et 0,2 millimètres.

Avec une telle réalisation des éléments imprimés 14, les éléments imprimés 14 sont de petite taille et suffisamment rapprochés pour contrôler le transfert de chaleur lors de l'échauffement par contact de l'élément décoratif 10.

### Liste des signes de référence

- 1: élément d'affichage
- 2: cadran
- 3: chiffres
- 4: partie ou région plane
- 5: région d'isolation
- 10: élément décoratif
- 11: première face de l'élément décoratif
- 12: deuxième face de l'élément décoratif
- 13: région/endroits d'éléments imprimés
- 14: éléments imprimés
- 15: région/endroits d'absence d'éléments imprimés
- 30: pliures

## Revendications

1. Élément décoratif (10) pour l'usage liée à un tableau de bord d'un véhicule automobile,
l'élément décoratif (10) ayant une forme tri-dimensionnelle,
l'élément décoratif (10) comprenant une première face (11) et une deuxième face (12),
la première face (11) étant visible par un utilisateur du tableau de bord et la deuxième face (12) étant prévu du côté opposé par rapport à la première face (11),
la forme tri-dimensionnelle de l'élément décoratif (10) étant obtenu lors d'un processus de thermoformage de l'élément décoratif (10), **caractérisée en ce**
-- **que** l'élément décoratif (10) comprend une multitude d'éléments imprimés (14) sur la deuxième face (12),
-- **que** la deuxième face (12) ensemble avec les éléments imprimés (14) résultent en une surface effective sur la deuxième face (12) telle que la surface effective comprend des rehaussements aux endroits des éléments imprimés (14) par rapport aux endroits où les éléments imprimés (14) sont absents
-- **que** les éléments imprimés (14) font partie d'une couche d'éléments de trame imprimée sur la deuxième face (12) pour équilibrer la transparence locale de l'élément décoratif (10) en contrôlant le transfert de chauleur lors de l'échauffement par contact de l'élément décoratif (10).

2. Élément décoratif (10) selon l'une quelconque la revendication 1, **caractérisé en ce que** les éléments imprimés (14) sont des éléments imprimés (14) à l'aide d'une encre transparente ou quasi-transparente.

3. Élément décoratif (10) selon l'une quelconque des revendications précédentes, **caractérisé en ce que** les éléments imprimés (14) ont une étendue le long de la deuxième face (12) entre 0,1 millimètres et 0,3 millimètres..

4. Élément décoratif (10) selon l'une quelconque des revendications précédentes, **caractérisé en ce que** les éléments imprimés (14) ont une épaisseur perpendiculaire à la deuxième face (12) réalisant les rehaussements aux endroits des éléments imprimés (14) par rapport aux endroits où les éléments imprimés (14) sont absents, les rehaussements ayant une hauteur maximale de 12 micromètres..

5. Élément décoratif (10) selon l'une quelconque des revendications précédentes, **caractérisé en ce que** l'élément décoratif (10) comprend un matériau à base de polycarbonate (PC).

6. Tableau de bord de véhicule automobile comprenant au moins un élément décoratif (10) selon l'une quelconque des revendications précédentes.

7. Procédé de fabrication d'un élément décoratif (10) selon la revendication 1, l'élément décoratif (10) étant pour l'usage liée à un tableau de bord d'un véhicule automobile, l'élément décoratif (10) ayant une forme tri-dimensionnelle,
l'élément décoratif (10) comprenant une première face (11) et une deuxième face (12),
la première face (11) étant visible par un utilisateur du tableau de bord et la deuxième face (12) étant prévu du côté opposé par rapport à la première face (11),
la forme trois-dimensionnelle de l'élément décoratif (10) étant obtenu lors d'un processus de thermoformage de l'élément décoratif (10),
le processus de thermoformage de l'élément décoratif (10) comprenant une première étape d'échauffement par contact de l'élément décoratif (10) dans un état plane de l'élément décoratif (10),
le processus de thermoformage de l'élément décoratif (10) comprenant une deuxième étape de formage de l'élément décoratif (10) d'obtention de la forme tri-dimensionnelle de l'élément décoratif (10),
**caractérisé en ce que**
-- que l'élément décoratif (10) comprend une multitude d'éléments imprimés (14) sur la deuxième face (12),
-- que la deuxième face (12) ensemble avec les éléments imprimés (14) résultent en une surface effective sur la deuxième face (12) telle que la surface effective comprend des rehaussements aux endroits des éléments imprimés (14) par rapport aux endroits où les éléments imprimés (14) sont absents.

8. Procédé de fabrication selon la revendication 8, **caractérisé en ce que** les éléments imprimés (14) sont imprimés avec une étendue le long de la deuxième face (12) entre 0,1 millimètres et 0,3 millimètres..

9. Procédé de fabrication selon la revendication 8 ou 9, **caractérisé en ce que** les éléments imprimés (14) sont imprimés avec une épaisseur perpendiculaire à la deuxième face (12) réalisant les rehaussements aux endroits des éléments imprimés (14) par rapport aux endroits où les éléments imprimés (14) sont absents, les rehaussements ayant une hauteur maximale de 12 micromètres..

## Patentansprüche

1. Dekoratives Element (10) zur Verwendung in Verbindung mit einem Armaturenbrett eines Kraftfahrzeugs, wobei
das dekorative Element (10) eine dreidimensionale Form aufweist,
das dekorative Element (10) eine erste Seite (11) und eine zweite Seite (12) umfasst,
die erste Seite (11) für einen Nutzer des Armaturenbretts sichtbar ist und die zweite Seite (12) auf der gegenüberliegenden Seite in Bezug auf die erste Seite (11) vorgesehen ist,
die dreidimensionale Form des dekorativen Elements (10) während eines Thermoformungsverfahrens des dekorativen Elements (10) erhalten wird, **dadurch gekennzeichnet**,
-- dass das dekorative Element (10) eine Vielzahl von Druckelementen (14) auf der zweiten Seite (12) umfasst,
-- dass die zweite Seite (12) zusammen mit den Druckelementen (14) eine effektive Oberfläche auf der zweiten Seite (12) ergibt, wobei die effektive Oberfläche im Vergleich zu den Stellen, an denen die Druckelemente (14) nicht vorhanden sind, an den Stellen der Druckelemente (14) Erhöhungen umfasst,
- dass die Druckelemente (14) Teil einer Schicht von Rasterelementen sind, die auf die zweite Seite (12) gedruckt ist, um die lokale Transparenz des dekorativen Elements (10) durch die Steuerung der Wärmeübertragung während der Erwärmung durch Kontakt mit dem dekorativen Element (10) auszugleichen.

2. Dekoratives Element (10) nach Anspruch 1, **dadurch gekennzeichnet, dass** die Druckelemente (14) mit Hilfe einer transparenten oder beinahe transparenten Tinte bedruckte Elemente (14) sind.

3. Dekoratives Element (10) nach einem der vorhergehenden Ansprüche, **dadurch gekennzeichnet, dass** sich die Druckelemente (14) 0,1 Millimeter bis 0,3 Millimeter entlang der zweiten Seite (12) erstrecken.

4. Dekoratives Element (10) nach einem der vorhergehenden Ansprüche, **dadurch gekennzeichnet, dass** die Druckelemente (14) eine Dicke perpendikular zur zweiten Seite (12) aufweisen, die die Erhöhungen an den Stellen der Druckelemente (14) im Vergleich zu den Stellen, an denen die Druckelemente (14) nicht vorhanden sind, bereitstellt, wobei die Erhöhungen eine maximale Höhe von 12 Mikrometern aufweisen.

5. Dekoratives Element (10) nach einem der vorhergehenden Ansprüche, **dadurch gekennzeichnet, dass** das dekorative Element (10) ein Material auf Basis von Polycarbonat (PC) umfasst.

6. Armaturenbrett eines Kraftfahrzeuges, umfassend mindestens ein dekoratives Element (10) nach einem der vorhergehenden Ansprüche.

7. Verfahren zur Herstellung eines dekorativen Elements (10) nach Anspruch 1, wobei das dekorative Element (10) zur Verwendung in Verbindung mit einem Armaturenbrett eines Kraftfahrzeuges dient,
das dekorative Element (10) eine dreidimensionale Form aufweist,
das dekorative Element (10) eine erste Seite (11) und eine zweite Seite (12) umfasst,
die erste Seite (11) für einen Nutzer des Armaturenbretts sichtbar ist und die zweite Seite (12) auf der gegenüberliegenden Seite in Bezug auf die erste Seite (11) vorgesehen ist,
die dreidimensionale Form des dekorativen Elements (10) während eines Thermoformungsverfahrens des dekorativen Elements (10) erhalten wird,
das Thermoformungsverfahren des dekorativen Elements (10) einen ersten Schritt der Erwärmung durch Kontakt des dekorativen Elements (10) in einem planaren Zustand des dekorativen Elements (10) umfasst,
das Thermoformungsverfahren des dekorativen Elements (10) einen zweiten Schritt der Formung des dekorativen Elements (10) zum Erhalt der dreidimensionalen Form des dekorativen Elements (10) umfasst, **dadurch gekennzeichnet**,
-- dass das dekorative Element (10) eine Vielzahl von Druckelementen (14) auf der zweiten Seite (12) umfasst,
-- dass die zweite Seite (12) zusammen mit den Druckelementen (14) eine effektive Oberfläche auf der zweiten Seite (12) ergibt, wobei die effektive Oberfläche im Vergleich zu den Stellen, an denen die Druckelemente (14) nicht vorhanden sind, an den Stellen der Druckelemente (14) Erhöhungen umfasst.

8. Herstellungsverfahren nach Anspruch 8, **dadurch gekennzeichnet, dass** die Druckelemente (14) sich zwischen 0,1 Millimeter und 0,3 Millimeter erstreckend entlang der zweiten Seite (12) gedruckt sind.

9. Herstellungsverfahren nach Anspruch 8 oder 9, **dadurch gekennzeichnet, dass** die Druckelemente (14) mit einer Dicke perpendikular zur zweiten Seite (12) gedruckt sind, die die Erhöhungen an den Stellen der Druckelemente (14) im Vergleich zu den Stellen, an denen die Druckelemente (14) nicht vorhanden sind, bereitstellt, wobei die Erhöhungen eine maximale Höhe von 12 Mikrometern aufweisen.

## Claims

1. A decorative element (10) for use connected with an instrument panel of a motor vehicle, the decorative element (10) having a three-dimensional form,
the decorative element (10) comprising a first face (11) and a second face (12),
the first face (11) being visible to a user of the instrument panel and the second face (12) being provided at the opposite side with respect to the first face (11),
the three-dimensional shape of the decorative element (10) being obtained during a process of thermoforming the decorative element (10), **characterised in that**
-- the decorative element (10) comprises a plurality of printed elements (14) on the second face (12),
-- the second face (12) together with the printed elements (14) result in an effective surface on the second face (12) such that the effective surface comprises, at the locations of the printed elements (14), portions that are raised relative to the locations at which the printed elements (14) are absent
- the printed elements (14) form part of a layer of screen elements printed on the second face (12) to balance the local transparency of the decorative element (10) by controlling the transfer of heat during heating by contact of the decorative element (10).

2. A decorative element (10) according to claim 1, **characterised in that** the printed elements (14) are printed using a transparent or quasi-transparent ink.

3. A decorative element (10) according to any one of the preceding claims, **characterised in that** the printed elements (14) have an extent along the second face (12) of between 0.1 millimetres and 0.3 millimetres.

4. A decorative element (10) according to any one of the preceding claims, **characterised in that** the printed elements (14) have a thickness that is perpendicular to the second face (12) forming the raised portions at the locations of the printed elements (14) relative to the locations where the printed elements (14) are absent, the raised portions having a maximum height of 12 micrometers.

5. A decorative element (10) according to any one of the preceding claims, **characterised in that** the decorative element (10) comprises a material based on polycarbonate (PC).

6. A motor vehicle instrument panel comprising at least one decorative element (10) according to any one of the preceding claims.

7. A method of manufacturing a decorative element (10) according to claim 1, the decorative element (10) being for use connected with an instrument panel of a motor vehicle,
the decorative element (10) having a three-dimensional form, the decorative element (10) comprising a first face (11) and a second face (12),
the first face (11) being visible to a user of the instrument panel and the second face (12) being provided at the opposite side with respect to the first face (11), the three-dimensional form of the decorative element (10) being obtained during a process of thermoforming the decorative element (10),
the process of thermoforming the decorative element (10) comprising a first step of heating the decorative element (10) by contact in a planar state of the decorative element (10),
the process of thermo forming the decorative element (10) comprising a second step of forming the decorative element (10) for obtaining the three-dimensional form of the decorative element (10), **characterised in that**
-- the decorative element (10) comprises a plurality of printed elements (14) on the second face (12),
-- the second face (12) together with the printed elements (14) result in an effective surface on the second face (12) such that the effective surface has, at the locations of the printed elements (14), portions that are raised relative to the locations at which the printed elements (14) are absent.

8. A manufacturing process according to claim 8, **characterised in that** the printed elements (14) are printed with an extent along the second face (12) of between 0.1 millimetres and 0.3 millimetres.

9. A manufacturing process according to claim 8 or 9, **characterised in that** the printed elements (14) are printed with a thickness that is perpendicular relative to the second face (12) and that produces the raised portions at the locations of the printed elements (14) relative to the locations at which the printed elements are absent, the raised portions having a maximum height of 12 micrometers.
